# EUROPEAN PATENT APPLICATION

(11) **EP 1 289 001 A2**
(43) Date of publication of application: **05.03.2003**
(21) Application number: 02019480.9
(22) Date of filing: 30.08.2002
(51) Int. Cl.: H01J 61/36, H01J 61/82, H01J 61/12, H01J 61/30, H01J 9/32, C03C 3/085

(54) **High pressure discharge lamps and method for producing a high pressure discharge lamp**

(30) Priority: 30.08.2001 JP 2001260745
(71) Applicant: MATSUSHITA ELECTRIC INDUSTRIAL CO., LTD., Kadoma-shi, Osaka 571-8501 (JP)
(72) Inventor: Kaneko, Yuriko, Nara-shi, Nara 631-0806 (JP); Takahashi, Kiyoshi, Kyotanabe-shi, Kyoto 610-0354 (JP); Horiuchi, Makoto, Sakurai-shi, Nara 633-0062 (JP); Seki, Tomoyuki, Takatsuki-shi, Osaka 569-1131 (JP); Ichibakase, Tsuyoshi, Takatsuki-shi, Osaka 569-1136 (JP); Kai, Makoto, Katano-shi, Osaka 576-0021 (JP); Hataoka, Shinichiro, Neyagawa-shi, Osaka 572-0055 (JP)
(74) Representative: Grünecker, Kinkeldey, Stockmair & Schwanhäusser Anwaltssozietät

(57) **Abstract**

A high pressure discharge lamp includes a vessel made mainly of quartz including a luminous portion (1) and side tube portions (2) extending from both sides of the luminous portion (1); possibly mercury (7) enclosed in the luminous portion (1); a metal foil (4) buried in each of the side tube portions (2); and an electrode rod (3), one end of which is connected to the metal foil (4) and the other of which is extending to the luminous portion (1). The electrode rod (3) has a surface area increase structure (6) for increasing a surface area in at least a part of a portion buried in the side tube portion (2). A sealing portion glass containing at least one metal material selected from the group consisting of metals and metal oxides is provided in a portion of the side tube portion (2) including at least a part of the metal foil (9), a connection portion between the metal foil (4) and the electrode rod (3) and a part of the surface area increase structure (6). A corresponding method for producing such a high pressure discharge lamp is also disclosed.

## Description

### BACKGROUND OF THE INVENTION

The present invention relates to a high pressure discharge lamp and a method for producing the same.

For a high pressure discharge lamp used in combination with a mirror, such as a light source for a liquid projector, a more compact and brighter lamp is in demand with a growing trend of compactness of a system.

In order to realize a compact and bright lamp, it is necessary to design the arc length to be short. However, in order to obtain a light source having a brightness equal to or more than that of a conventional lamp when the arc length is made short, it is necessary to increase the pressure of the materials enclosed in the lamp because the lamp current is restricted by the electrodes. In other words, a lamp that can withstand an operation at a high pressure is in demand. In particular, it is expected that an operation at a superhigh pressure of 30 MPa or more can provide remarkably improved characteristics, compared with a conventional lamp.

Furthermore, even for a lamp having an operating pressure of less than 30MPa, the problem that a lamp is broken around the end of its lifetime or other malfunctions has not yet been solved, so that a lamp having a high withstand pressure structure that has not ever existed is required in order to improve the security of a lamp whether the operating pressure is high or low.

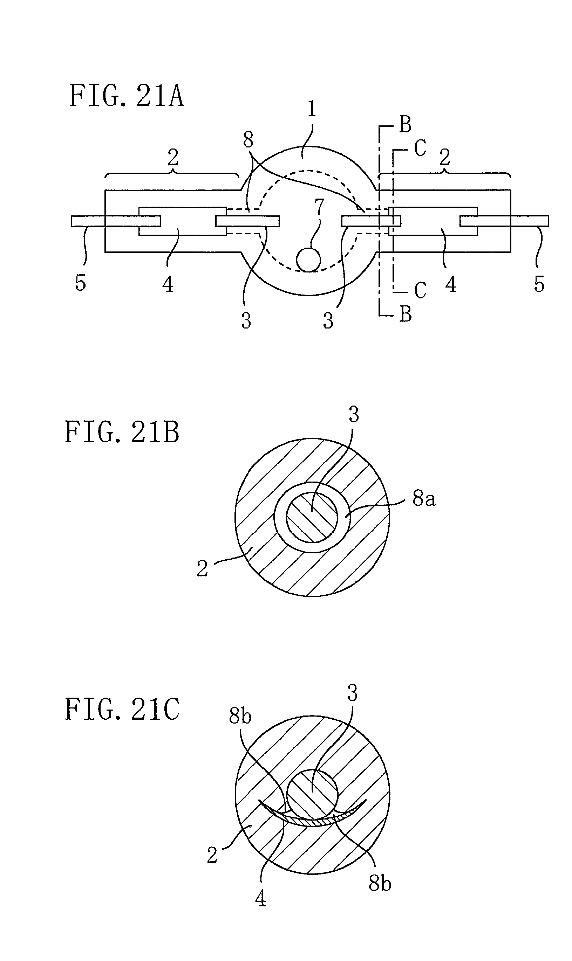

Figure **21A** shows an example of the structure of a conventional high pressure discharge lamp. The high pressure discharge lamp in Figure **21A** has a vessel (hereinafter, simply referred to as "tube") including a luminous portion **1** and side tube portions **2** extending from the luminous portion **1** that is made mainly of quartz glass. A portion of an electrode rod **3**, a metal foil **4** electrically connected to the electrode rod **3**, and a portion of an external lead wire **5** electrically connected to the other end of the metal foil **4** are buried in the side tube portion **2**. Mercury **7** and a rare gas (not shown) are enclosed in the luminous portion **1**.

The electrode rod **3** is made mainly of tungsten, and the side tube **2** is made mainly of quartz glass. It is very difficult to airtightly attach these two materials because of the difference in the thermal expansion coefficient.

Furthermore, there is the problem that glass tends to be cracked starting from the end portion of the metal foil **4** on the side of the luminous portion **1** during lamp operation in conventional lamps. The cracks are generated by a small gap **8**, which actually exists although it appears as if the electrode rod **3** and the side tube **2** were airtightly attached. For example, in the case of shrink sealing, in the cross-section **B-B** of the gap **8** between the electrode rod **3** and the side tube **2,** there is a substantially circular gap **8a** as shown in Figure **21B**, which is not a shape on which stress is to be concentrated. On the other hand, in the cross-section **C-C** of the gap **8** in the connection portion between the metal foil **4** and the electrode rod **3**, there is a gap **8b** having an angular shape along the edge portion of the metal foil **4** as shown in Figure **21C.** Stress is concentrated on this gap **8b,** and cracks are generated in the glass.

The lamp disclosed in Japanese Laid-Open Patent Publication No. 2001-118542 is an example of a lamp having a high withstand pressure structure. This lamp is a short arc type high pressure mercury lamp in which a coil member is provided in an auxiliary glass made of quartz glass that is inserted in a sealing tube portion made of quartz glass, and the coil member supports an electrode rod. According to this structure, a gap is present between the coil member and the electrode rod, so that cracks in the sealing tube portion that otherwise might be generated by contraction of the electrode rod due to lamp operation cycles are prevented and eventually the withstand pressure can be improved.

However, in the lamp disclosed in Japanese Laid-Open Patent Publication No. 2001-118542, the withstand pressure with respect to the operation cycles is increased, but the adhesion in the portion in which the coil member and the sealing tube portion are attached is not sufficient because of the difference in the thermal expansion coefficient.

Furthermore, the applicant of the invention disclosed a method for eliminating the gap **8b** generated between the electrode rod **3** and the metal foil **4** in Japanese Laid-Open Patent Publication No. 2000-214070, but further improvement is required in order to realize a lamp having a high withstand pressure structure of 30 MPa or more without fail.

### SUMMARY OF THE INVENTION

It is a main object of the present invention to provide a high pressure discharge lamp having a high withstand pressure structure and a method for producing the same.

A high pressure discharge lamp of the present invention includes a vessel made mainly of quartz including a luminous portion and side tube portions extending from both sides of the luminous portion; mercury enclosed in the luminous portion; a metal foil buried in each of the side tube portions; and an electrode rod, one end of which is connected to the metal foil and the other of which is extending to the luminous portion. The electrode rod has a surface area increase structure for increasing a surface area in at least a part of a portion buried in the side tube portion. A sealing portion glass containing at least one metal material selected from the group consisting of metals and metal oxides thereof is provided in a portion of the side tube portion including at least a part of the metal foil, a connection portion between the metal foil and the electrode rod and a part of the surface area increase structure.

In one embodiment, the amount of the mercury enclosed is 230 mg /cm³ or more based on the volume of the luminous portion.

In one embodiment, the internal pressure of the luminous portion is 23 MPa or more during stable operation.

It is preferable that the internal pressure of the luminous portion is 30 MPa or more during stable operation.

It is preferable that the sealing portion glass is provided in a position having a temperature at which the mercury is not aggregated during stable operation or higher and a temperature at which the sealing portion glass is not softened or lower during stable operation.

In one embodiment, the metal in the sealing portion glass is selected from the group consisting of copper, aluminum, iron, sodium and boron.

In one embodiment, the surface area increase structure is a coil structure.

In one embodiment, the surface area increase structure is a threaded structure, and when the outer diameter of the narrowest portion of a portion of the electrode rod in which the surface area increase structure is provided is taken as 1, the outer diameter of the most projected portion is in the range from 1.1 to 2.0.

Another high pressure discharge lamp of the present invention includes a luminous bulb including a pair of electrode rods inside the bulb; and a pair of sealing portions that extend from the luminous bulb and maintain airtightness in the luminous bulb. A part of each of the pair of electrode rods is buried in a corresponding sealing portion of the pair of sealing portions. One end of the electrode rod is exposed to an internal portion of the luminous bulb, and the other end of the electrode rod is connected to a metal foil provided in the sealing portion. A coil is wound around or a threaded portion is formed in at least a part of a portion buried in the sealing portion of the electrode rod. The sealing portion has a first glass portion extending from the luminous bulb and a second glass portion provided in at least a part of the inside of the first glass portion. The second glass is glass containing at least one of at least one metal selected from the group consisting of copper, aluminum, iron, sodium and boron, and metal oxides thereof. The second glass is present in a region of the sealing portion including a part of the metal foil, a connection portion between the metal foil and the electrode rod, and a portion of the electrode rod in which the coil or the threaded portion is positioned.

A method for producing a high pressure discharge lamp of the present invention includes preparing a vessel made mainly of quartz including a luminous portion and side tube portions extending from both sides of the luminous portion; and an electrode assembly structure including at least a metal foil and an electrode rod connected to one end of the metal foil and having a surface area increase structure; covering a portion of the electrode assembly structure including at least a part of the metal foil, a connection portion between the metal foil and the electrode rod, and a part of the surface area increase structure with a sealing portion glass made of quartz glass containing at least one metal material selected from the group consisting of metals and metal oxides; inserting the electrode assembly structure in the vessel so that the portion of the electrode assembly structure covered with the sealing portion glass is positioned inside the side tube portions; and heating the side tube portion to seal the electrode assembly structure.

In one embodiment, the step of heating the side tube portion to seal the electrode assembly structure includes the step of shrinking the side tube portion from the boundary portion between the luminous portion and the side tube portion up to a portion before the sealing portion glass; and the step of shrinking the side tube portion on the metal foil side from the end portion of the sealing portion glass on the luminous portion side.

In one embodiment, the step of heating the side tube portion to seal the electrode assembly structure includes the step of shrinking the side tube portion from the boundary portion between the luminous portion and the side tube portion up to a portion before the sealing portion glass and shrinking the side tube portion on the metal foil side from the end portion of the sealing portion glass on the luminous portion side.

In one embodiment, the step of heating the side tube portion to seal the electrode assembly structure includes the step of shrinking the side tube portion from the boundary portion between the luminous portion and the side tube portion up to a portion before the sealing portion glass, cooling the side tube portion, and then shrinking the side tube portion on the metal foil side from the end portion of the sealing portion glass on the luminous portion side.

It is preferable that when shrinking the side tube portion from the boundary portion between the luminous portion and the side tube portion up to a portion before the sealing portion glass, the side tube portion is shrunk in a direction from the boundary portion between the luminous portion and the side tube portion to the sealing portion glass.

In one embodiment, the sealing portion glass is a cylindrical structure.

In one embodiment, the method for producing a high pressure discharge lamp further includes inserting the sealing portion glass in the electrode assembly structure; and firing and attaching the sealing portion glass to the electrode assembly structure.

In one embodiment, the sealing portion glass is formed by applying a powder material and firing the same.

In one embodiment, the surface area increase structure is a coil structure.

In one embodiment, the surface area increase structure is a threaded structure, and when the outer diameter of the narrowest portion of a portion of the electrode rod in which the surface area increase structure is provided is taken as 1, the outer diameter of the most projected portion is in the range from 1.1 to 2.0.

In one embodiment, the softening point of the sealing portion glass is in a range from 500°C to 1750°C.

In one embodiment, the metal in the sealing portion glass is at least one selected from the group consisting of copper, aluminum, iron, sodium and boron.

According to the present invention, a sealing portion glass made of quartz containing at least one metal material selected from the group consisting of metals and metal oxides is provided in a portion of the side tube portions including a part of the metal foil, the connection portion between the metal foil and the electrode rod, and a part of the surface area increase structure. Thus, the sealing portion glass is melted into a gap created in the connection portion between the metal foil and the electrode rod to fill the gap. In addition, the sealing portion glass is melted into the surface area increase structure, so that the adhesion between the electrode rod and the side tube portion can be strengthened, which prevents cracks otherwise occurring in the connection portion between the metal foil and the electrode rod, and improves the withstand pressure of the lamp. Furthermore, even if a gap should be created between the surface area increase structure and the sealing portion glass during lamp operation, cracks due to stress otherwise occurring in the connection portion can be suppressed at the same time because the gap in the connection portion between the metal foil and the electrode rod is filled up. Thus, a high withstand pressure structure with further high reliability with respect to lifetime can be realized.

When the sealing portion glass is provided in a position having a temperature at which the mercury is not aggregated during stable operation or higher and a temperature at which the sealing portion glass is not softened or lower, the light emission characteristics are prevented from deteriorating, and the sealing portion glass is prevented from being melted and attached onto the inside of the luminous portion during operation.

Furthermore, the metal in the sealing portion glass is selected from the group consisting of copper, aluminum, iron, sodium and boron, this structure makes it possible to set the thermal expansion coefficient of the sealing portion glass to be between the thermal expansion coefficient of the side tube portion and the thermal expansion coefficient of the surface area increase structure, and to absorb strain (stress) due to thermal load occurring during operation cycles, and suppress generation of cracks.

The surface area increase structure can be a coil structure, and the surface area increase structure can be easily provided by making a coil structure as the surface area increase structure. Alternatively, the surface area increase structure can be a threaded structure. In this case, it is preferable that when the outer diameter of the narrowest portion of a portion of the electrode rod in which the surface area increase structure is provided is taken as 1, the outer diameter of the most projected portion is in a range from 1.1 to 2.0. This structure makes it possible to suppress cracks otherwise generated in the side tube portion while improving the withstand pressure.

According to the method for producing a high pressure discharge lamp of the present invention, a high pressure discharge lamp having no gap between the side tube portion and the connection portion between the metal foil and the electrode rod, an improved adhesion between the electrode rod and the side tube portion, and an improved withstand pressure of the lamp can be produced.

When heating the side tube portion to seal the electrode assembly structure, the process of shrinking the side tube portion from the boundary portion between the luminous portion and the side tube portion up to a portion before the sealing portion glass; and the process of shrinking the side tube portion on the metal foil side from the end portion of the sealing portion glass on the luminous portion side can be performed. Furthermore, in heating the side tube portion to seal the electrode assembly structure, when the side tube portion from the boundary portion between the luminous portion and the side tube portion up to a portion before the sealing portion glass is shrunk; and the side tube portion on the metal foil side is shrunk from the end portion of the sealing portion glass on the luminous portion side, then impurity gas occurring from the sealing portion glass is suppressed from entering the luminous portion, and thus the lamp characteristics can be improved.

In addition, when the side tube portion is shrunk from the boundary portion between the luminous portion and the side tube portion up to a portion before the sealing portion glass, the side tube portion is cooled, and the side tube portion on the metal foil side is shrunk from the end portion of the sealing portion glass on the luminous portion side, then impurity gas occurring from the sealing portion glass is further suppressed from entering the luminous portion, and thus the lamp characteristics can be improved. Furthermore, in shrinking the side tube portion from the boundary portion between the luminous portion and the side tube portion up to a portion before the sealing portion glass, the side tube portion is shrunk in a direction from the boundary portion between the luminous portion and the side tube portion to the sealing portion glass, then impurity gas occurring from the sealing portion glass is even further suppressed from entering the luminous portion, and thus the lamp characteristics can be improved.

When the sealing portion glass is a cylindrical structure, the sealing portion glass is inserted in the electrode assembly structure, and the sealing portion glass is fired and attached to the electrode assembly structure, then the metal foil is suppressed from being bent when inserting the electrode assembly structure in the vessel by firing and attaching the sealing portion glass to the electrode assembly structure. When the sealing portion glass is formed by applying a powder material and firing the same, the process can be simplified by forming the sealing portion glass to cover the electrode assembly structure with a powder material.

According to the present invention, the electrode rod has a surface area increase structure for increasing the surface area in at least a part of the portion buried in the side tube portion. In addition, the sealing portion glass containing at least one metal material selected from the group consisting of metals and metal oxides is provided in the portion of the side tube portion including at least a part of the metal foil, the connection portion between the metal foil and the electrode rod and a part of the surface area increase structure. Therefore, a high pressure discharge lamp having a further higher withstand pressure and a method for producing the same can be provided.

### BRIEF DESCRIPTION OF THE DRAWINGS

Figure **1** is a schematic view showing the structure of a lamp of Embodiment 1 of the present invention.
Figure **2** is a schematic view showing ink insertion of the lamp of Embodiment 1 of the present invention.
Figure **3** is a schematic view showing the structure of a withstand pressure test of the lamp of Embodiment 1 of the present invention.
Figure **4** is a graph comparing the withstand pressure between a lamp of Embodiment 1 of the present invention and a conventional lamp.
Figure **5** is a view showing a cross-section of an example of the surface area increase structure of Embodiment 1 of the present invention.
Figure **6** is a view showing a lamp of Embodiment 1 when the distance from the interface between the luminous bulb and the side tube portion to the end portion of the sealing portion glass on the luminous bulb side is 20 mm.
Figure **7** is a view showing a lamp of Embodiment 1 when the end portion of the sealing portion glass on the luminous bulb side is provided in the interface between the luminous bulb and the side tube portion.
Figure **8** is a view showing a tungsten coil in Embodiment 2.
Figure **9** is a view showing an electrode rod provided with a tungsten coil in Embodiment 2.
Figure **10** is a view showing an electrode assembly structure in Embodiment 2.
Figure **11** is a view showing a tube in Embodiment 2.
Figure **12** is a view showing a sealing portion glass in Embodiment 2.
Figure **13A** is a view showing an electrode assembly structure to which a sealing portion glass is attached in Embodiment 2.
Figure **13B** is a view showing an example of a structure in which a sealing portion glass is secured in an electrode assembly structure in Embodiment 2.
Figure **13C** is a view showing an example of a structure in which a sealing portion glass is secured in an electrode assembly structure in Embodiment 2.
Figure **14** is a view showing an example of a structure in which a sealing portion glass is provided in an electrode assembly structure in Embodiment 2.
Figure **15** is a view showing a structure in which a side tube portion is provisionally sealed in Embodiment 2.
Figure **16** is a view showing a structure in which a first sealing portion is provided in a side tube portion on one end in Embodiment 2.
Figure **17** is a view showing a structure in which a second sealing portion is provided in a side tube portion on one end in Embodiment 2.
Figure **18** is a view showing a gap in a missing portion generated between the first sealing portion and the second sealing portion in Embodiment 2.
Figure **19** is a graph showing the relationship between the length and the withstand pressure of the first sealing portion in Embodiment 2.
Figure **20** is a view showing a structure in which the other side tube portion is provisionally sealed in Embodiment 2.
Figure **21A** is a view showing a structure of a high pressure discharge lamp provided with a conventional sealing structure.
Figure **21B** is a cross-sectional view of the side tube portion taken along line **B-B**.
Figure **21C** is a cross-sectional view of the side tube portion taken along line **C-C**.
Figure **22** is a view showing ink insertion in the conventional lamp.
Figure **23** is a view showing the structure of a high pressure discharge lamp as a comparative example.

### DETAILED DESCRIPTION OF THE INVENTION

The inventors of the present invention produced a high pressure discharge lamp having a side tube portion in which a coil for increasing the surface area of an electrode rod and a glass having a thermal expansion coefficient between those of the coil and the side tube portion are combined, found out the effect of improving the adhesion that has not been known before, and succeeded in realizing a lamp having a high withstand pressure structure.

Hereinafter, embodiments of the present invention will be described with reference to the accompanying drawings. For simplification, in the following drawings, the elements having substantially the same function bear the same reference numerals. The present invention is not limited to the following embodiments.

### Embodiment 1

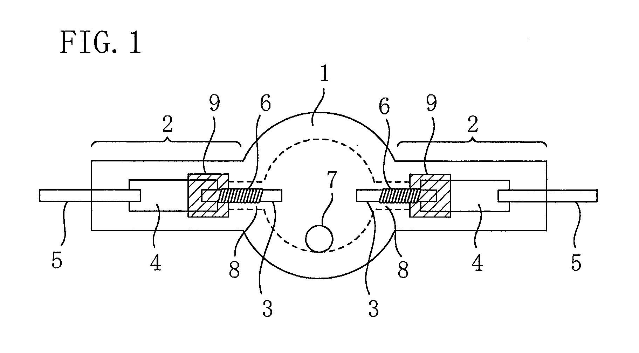

Figure **1** is a schematic view showing the structure of a high pressure discharge lamp of Embodiment 1 of the present invention. It should be noted that a "high pressure discharge lamp" refers to a discharge lamp in which the internal pressure is one atmospheric pressure or more during lamp operation. Typical examples of the high pressure discharge lamp are a high pressure mercury lamp or a metal halide lamp, which are called HID lamps (high intensity lamps)

The high pressure discharge lamp shown in Figure **1** includes a vessel (which may be referred to as "tube" in the following) including a luminous portion **1** and side tube portions **2** extending from both sides of the luminous portion **1**. The vessel is made mainly of quartz (more specifically, quartz glass). At least mercury **7** is enclosed in the luminous portion **1**. The side tube portion **2** of the high pressure discharge lamp shown in Figure **1** is a portion that keeps airtightness inside the luminous portion **1** (sealing portion), and the high pressure discharge lamp of this embodiment is a double end type lamp having two side tube portions **2**.

A metal foil (molybdenum foil) **4** is buried in the side tube portion **2**. One end of an electrode rod **3** is connected to the metal foil **4**, and the other end of the electrode rod **3** extends to the luminous portion **1**. The electrode rod **3** has a surface area increase structure **6** for increasing the surface area in at least a part of the portion that is buried in the side tube portion **2**. A sealing portion glass **9** is provided in a portion of the side tube portion **2** including a portion of the metal foil **4**, the connection portion between the metal foil **4** and the electrode rod **3** and a portion of the surface area increase structure **6**. The sealing portion glass **9** is glass which contains at least one metal material selected from the group consisting of metals and metal oxides thereof (herein, the metal material includes metal oxide materials), and the metal for the sealing portion glass **9** is selected from the group consisting of copper, aluminum, iron, sodium and boron. The sealing portion glass has a thermal expansion coefficient between those of the coil **6** and the side tube portion (quartz glass) **2**.

When the high pressure discharge lamp shown in Figure **1** is a high pressure mercury lamp, the amount of the mercury **7** enclosed is, for example, 150 mg to 200 mg/cm³ or more, preferably 230 mg/cm³ or more, and more preferably 300 mg/cm³ or more, based on the volume of the luminous portion **1.** When the amount of the mercury **7** enclosed is 230 mg/cm³, the internal pressure of the luminous portion **1** is substantially 23 MPa during stable operation, and when the amount of the mercury 7 enclosed is 300 mg/cm³, the internal pressure of the luminous portion **1** is substantially 30 MPa during stable operation.

It is preferable that the sealing portion glass **9** is provided in a portion having a temperature at which the mercury **7** does not aggregate during stable operation or higher and a temperature at which the sealing portion glass **9** is not softened or lower during stable operation. It is preferable to provide the sealing portion glass **9** in a portion having a temperature at which the mercury **7** does not aggregate during stable operation or higher, because this can suppress the deterioration of the light emission characteristics of the lamp due to the mercury stored in a small gap between the side tube portion **2** and the electrode rod **3**. It is preferable to provide the sealing portion glass **9** in a portion having a temperature at which the sealing portion glass **9** is not softened or lower, because this can prevent the sealing portion glass **9** from being melted during operation and being attached to the internal portion of the luminous portion **1**. The softening point of the sealing portion glass **9** is, for example, 500°C to 1750°C.

Hereinafter, the high pressure discharge lamp of this embodiment that is a mercury lamp (high pressure mercury lamp) will be described in greater detail.

A mercury lamp shown in Figure **1** has a vessel (hereinafter, referred to as "tube") in which a side tube portion **2** made mainly of quartz glass extends from a luminous portion **1** made mainly of quartz glass having an internal volume of about 0.025 cc. A portion of an electrode rod **3** made mainly of tungsten having a rod diameter of about 0.25 mm, a metal foil **4** made mainly of molybdenum that is electrically connected to the electrode rod **3**, and a portion of an external lead wire **5** electrically connected to the other end of the metal foil **4** are buried in the side tube portion **2**. A tungsten coil **6** having a cross-section diameter of 60 µm, which is an example of a surface area increase structure for increasing the surface area of the electrode rod **3**, is wound around the electrode rod **3** positioned in the side tube portion **2**. The tungsten coil **6** is provided in the portion except for the welded portion of the metal foil **4** and the electrode rod **3.** In the luminous portion **1,** 7.5 mg of mercury 7, which is the luminous species, and 200 mbar (at 25°C) of argon gas (not shown) are enclosed. There is a small gap **8** naturally occurring in the process of sealing the electrodes due to the difference in the thermal expansion coefficient between the electrode rod **3** and the side tube portion **2** and between the tungsten coil **6** and the side tube portion **2.** In Figure **1**, the gap **8** is shown large for clarification, but in reality, it is so narrow a gap that it cannot be visually seen. The above-described tungsten coil **6** does not refer to the coil (hereinafter, referred to as "electrode coil") that is wound around the head of the electrode rod **3** for maintaining arc discharge.

A sealing portion glass **9** is present in a boundary portion between the side tube portion **2** and a portion including the connection portion between the metal foil **4** and the electrode rod **3,** a portion of the electrode rod **3** that is wound with the tungsten coil **6,** and a portion of the metal foil **4.** The sealing portion glass **9** is glass that is quartz SiO₂ containing copper Cu and/or copper oxide CuO, and alumina Al₂O₃. There is no gap **8** between the sealing portion glass **9** and the tungsten **6** wound around the electrode rod **3** or between the sealing portion glass **9** and the metal foil **4**. The sealing portion glass **9** may be present, not only in a portion of the metal foil, but also the entire portion thereof.

As the sealing portion glass **9**, for example, glass (product name: SCY2, manufactured by SEMCOM, strain point: 520°C) containing SiO₂: 62 wt%, Al₂O₃ : 13.8 wt%, and CuO : 23.7 wt% can be used. When glass (product name: SCY2) containing copper oxide as an additive was used and the composition of the sealing portion glass (quartz glass layer) **9** containing the copper oxide was analyzed, then it was confirmed that copper was present not in the form of copper oxide, but substantially in the form of copper in the sealing portion glass **9**. The reason for this is not clear, but it seems that oxygen of the copper oxide is used for quartz glass (silica) for some reason, and it is present in the form of copper.

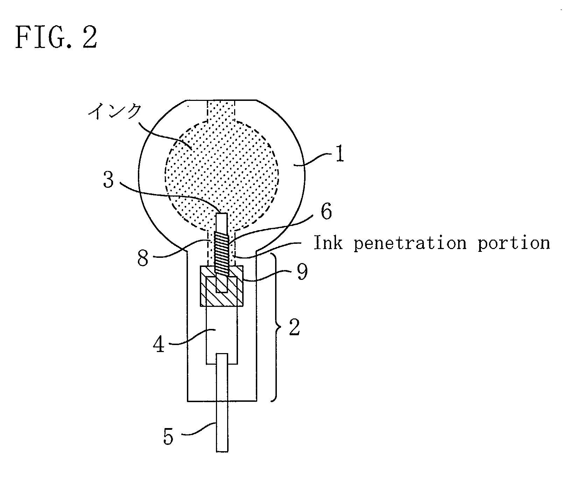

Injection of ink can indicate whether or not the gap **8** that is too small to be visually recognized is present. Figure **2** is a schematic view showing a determination method. The end portion of the luminous bulb is cut so that one side tube portion **2** is removed in order to inject ink into the luminous bulb, and ink (New Coccin, Red No. 102) is injected through the cut port. The side tube portion **2** is moved to face downward so that the remaining ink penetrates into the side tube portion **2**. Ultrasonic vibration is applied while the outside of the side tube portion **2** is immersed in water so that the ink goes into the narrow gap **8**, and the bulb is left undisturbed for a few hours.

As a result, in the lamp of this embodiment, the ink goes into the gap **8**, but the ink does not go into the portion around the tungsten coil **6** of the electrode rod **3** and the metal foil **4** that are airtightly attached to the sealing portion glass **9**. The gap **8** referred to herein means a gap continuously leading to the luminous portion **1**. For example, ink does not go into discontinuously present gaps. In other words, according to the ink penetration test, no gaps seems to be present in the vicinity of the connection portion between the electrode rod **3** and the metal foil **4**, because the sealing portion glass **9** and the tungsten coil **6** are tightly attached. When the cross-section in the vicinity of the connection portion between the electrode rod **3** and the metal foil **4** was enlarged and examined, there was no gap.

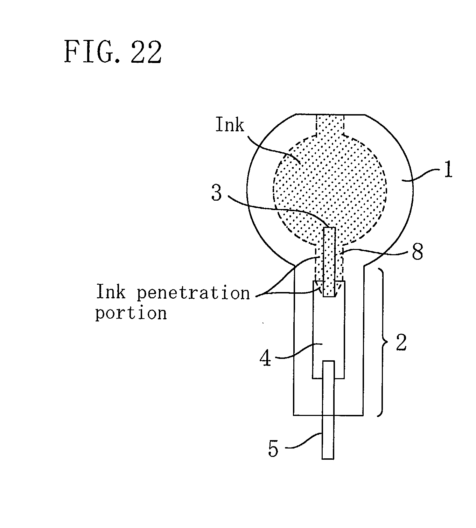

Then, the results of the ink penetration test in a conventional lamp as a comparative example are shown. Figure **21A** shows an example of a conventional lamp used. In Figure **21A**, the same portions as in Figure **1** bear the same reference numerals and are not described further. The difference from Figure **1** is that the sealing portion glass **9** and the tungsten coil **6** are not present. When the same ink test as in the lamp of this embodiment was performed, ink was observed to go into the gap **8** between the electrode rod **3** and the side tube portion **2,** as in Figure **22,** and the ink was also observed to go into the gap **8b** around the welded portion between the electrode rod **3** and the metal foil **4**.

The description above indicates that in the lamp having the structure shown in Figure **1** of this embodiment, simply providing the sealing portion glass **9** not only eliminates the gap **8b** between the side tube portion **2** and the connection portion between the electrode rod **3** and the metal foil **4,** but also the gap **8** between the sealing portion glass **9** and the tungsten coil **6** is eliminated, so that the attachment between the electrode **3** and the sealing portion glass **9**, and the metal foil **4** and the sealing portion glass **9** are tighter than in the conventional lamp. A lamp in which a tungsten coil is provided in a side tube portion is disclosed in Japanese Laid-Open Patent Publication No. 2001-118542. However, in this lamp, the tungsten coil is provided to make the gap **8** between the side tube portion **2** and the electrode rod **3**, and is not directed to improving the attachment as the present invention.

This effect of improving attachment can be obtained, even if the sealing portion glass **9** is replaced by glass in which copper Cu, alumina Al₂O₃ and quartz SiO₂ are mixed. Furthermore, the same effect can be obtained, even if the sealing portion glass **9** is replaced by glass in which iron Fe and iron oxide Fe₂O₃ are mixed, glass in which alumina Al₂O₃ is mixed, or glass in which copper oxide CuO, copper Cu, alumina Al₂O₃, sodium carbonate Na₂CO₃, sodium Na, and boron oxide B₂O₃ are mixed. The fact that these glasses can provide the same effect was confirmed by estimating the properties thereof using simulations by an information system (named "INTERGLAD Ver.5") regarding glass.

Next, the measurement of the withstand pressure of a lamp having the side tube portion **2** having the structure shown in Figure **1** will be described.

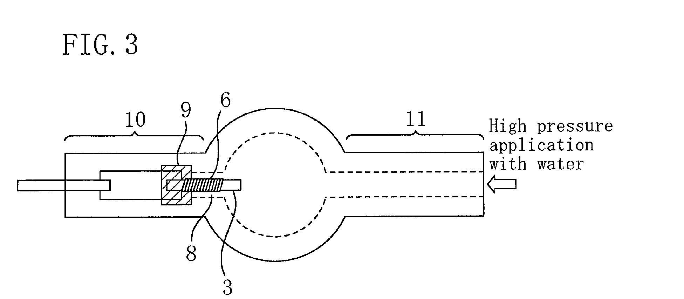

For measurement, a lamp shown in Figure **3** was used. In Figure **3,** the same portions as in Figure **1** bear the same reference numerals and are not described further. A closed side tube portion **10** on one side has the same structure as the side tube portion **12** having the structure shown in Figure **1**, and the electrode rod **3**, the metal foil 4 and the external lead wire **5** are sealed in the closed side tube portion **10**. An open side tube portion **11** on the other side is not sealed and open. High pressure water was introduced from the open side tube portion **11,** and the pressure that causes a burst was measured. The burst pressure of the lamp at this time was taken as an initial withstand pressure of the lamp.

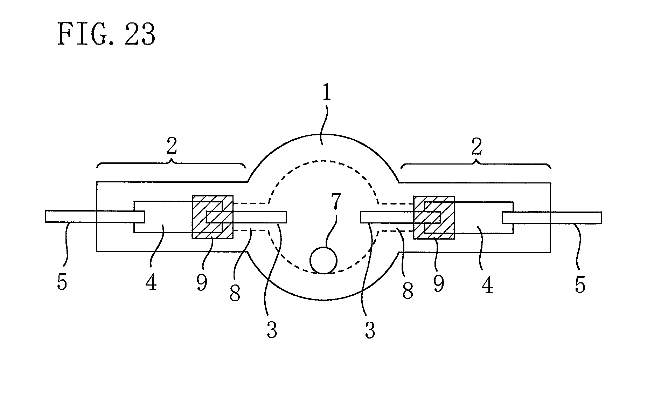

Likewise, measurement was performed in the same manner with lamps having other structures as comparative examples. Lamp **1** of a comparative example is a lamp in which only one of the side tube portions **2** of the lamp shown in Figure **21A** is open in the same manner as in Figure **3**. Lamp **2** of a comparative example is a lamp in which only one of the side tube portions **2** of the lamp (Japanese Patent Application No. 2000-214070) shown in Figure **23** is open in the same manner as in Figure **3**. Japanese Patent Application No. 2000-214070 and the corresponding US Application No. 09/903,852 are incorporated herein by reference. In Figure **23,** the same portions as in Figure **1** bear the same reference numerals and are not described further. The lamp shown in Figure **23** is different from the lamp shown in Figure **1** of the present invention only in that the tungsten coil 6 wound around electrode rod **3** is not provided.

The ink penetration test was performed with respect to the lamp of Figure **23** in the same manner as in Figure **2.** It was confirmed that ink penetrated into the gap **8,** but did not penetrate into the electrode rod **3** or the metal foil **4** that were covered with the sealing portion glass **9**.

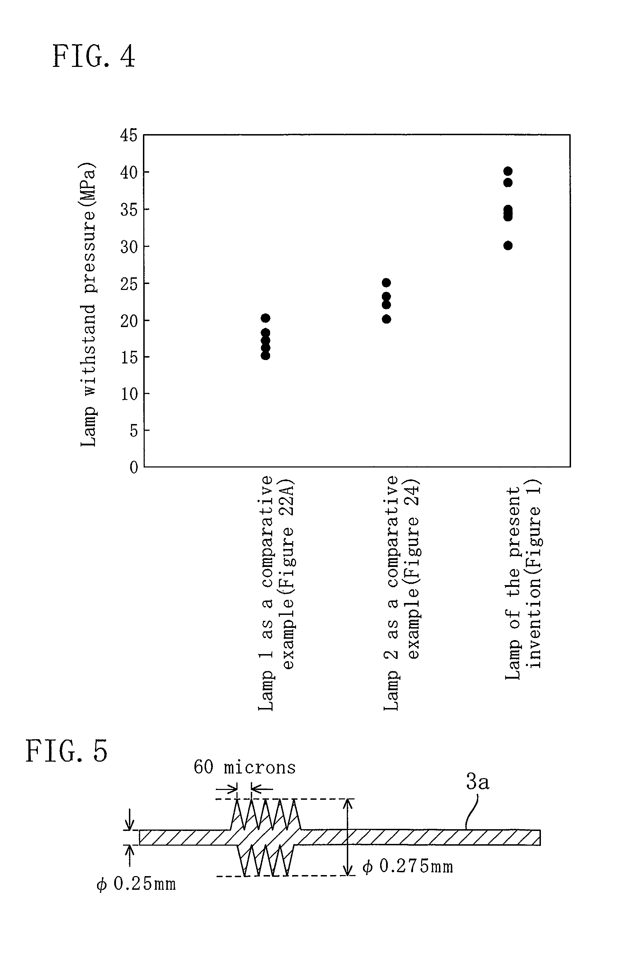

Figure **4** shows the results of the withstand pressure measurement of the lamp of this embodiment (the lamp of the present invention) and the lamps of the comparative examples. According to this withstand pressure measurement, the withstand pressure of the closed side tube portion **10** of the lamp of the present invention (Figure **1**) was 30 to 40 MPa. On the other hand, the withstand pressure of the side tube portion **2** of the lamp **1** as a comparative example in Figure **21A** was 15 to 20 MPa. The withstand pressure of the side tube portion **2** of the lamp **2** as a comparative example in Figure **23** was 20 to 25 MPa. In other words, it is confirmed that the lamp having the structure shown in Figure 1 can have a higher withstand pressure.

In the lamp **2** as a comparative example, the attachment properties and the withstand pressure can be improved, regardless of the presence or the absence of the tungsten coil **6.** In other words, the sealing portion glass **9** improves the attachment properties, that is, the sealing portion glass **9** improves the adhesion so that the withstand pressure of the lamp is improved. However, further providing the tungsten coil **6** can improve the withstand pressure of the lamp further. This seems to occur because winding the tungsten coil **6** around the electrode rod **3** increases the area in which the sealing portion glass **9** is attached to the electrode rod **3**, so that the electrode rod **3** and the sealing portion glass **9** are attached to each other more tightly. In other words, the increase of the area in which the sealing portion glass **9** is in contact with the electrode rod **3** made it possible to increase the withstand pressure of the lamp.

What is surprising is as follows. It was believed that the tungsten coil **6** wound around the electrode rod **3** positioned inside the side tube portion **2** suppressed cracks from occurring in the side tube portion **2** by creating gaps between the side tube portion **2** and the electrode rod **3**. However, if glass (corresponding to "sealing portion glass" in the present invention) that has a thermal expansion coefficient between those of the tungsten coil **6** and the side tube portion **2** is provided between the tungsten coil **6** and the side tube portion **2**, the adhesion between the tungsten coil **6** and the side tube portion **2** can be increased, and the withstand of the lamp can be improved.

Then, examination was performed, not with the tungsten coil **6**, but with a rough electrode rod **3a** having a rough surface as shown in Figure **5**. The shape of the roughness is a threaded structure having a cross-section of a triangle, and the outer diameter of the narrowest portion of the rough electrode rod **3a** is 0.250 mm, and the outer diameter of the largest portion of the rough electrode rod **3a** is 0.275 mm. The distance between the apexes of the triangles is 60 µm. When sealing was performed with the structure of the side tube portion **2** shown in Figure **3** with the rough electrode rod **3a**, the withstand pressure was 30 to 40 MPa. That is to say, not only providing the tungsten coil of Figure 1, but also making the surface of the electrode rod **3a** be rough can provide the effect of improving the withstand pressure.

The withstand pressure test and the ink penetration test were performed with the structure shown in Figure **3,** using 0.30 mm (when the outer diameter of the narrowest portion of the rough electrode rod **3a** of 0.25 mm is taken as 1, the radio in the outer diameter of the largest portion is 1.2), 0.40 mm (the ratio is 1.6), 0.50 mm (the ratio is 2.0), and 0.60 mm (the ratio is 2.4) as the outer diameter of the largest portion of the rough electrode rod **3a**. As a result, when the outer diameter of the largest portion is increased up to 0.60 mm, the attachment properties deteriorated, and the withstand pressure of the lamp was reduced to 25 MPa. In other words, it is preferable that when the outer diameter of the narrowest portion is taken as 1, the outer diameter of the largest portion is 2.0 or less for the roughness shape of the rough electrode rod **3a**.

Furthermore, when the outer diameter of the narrowest portion is 0.25 mm and the outer diameter of the largest portion is 0.26 mm (the ratio is 1.04), the withstand pressure of the lamp is 25 to 30 MPa, which is slightly improved, but this is not a significant difference. This seems to be because the roughness shape is mild and the attachment area of the rough electrode rod **3a** is not sufficiently increased for improvement of the withstand pressure. In other words, it is preferable that when the outer diameter of the narrowest portion is taken as 1, the outer diameter of the largest portion is 1.1 or more for the roughness shape of the rough electrode rod **3a**.

The cross section of the threaded structure as the roughness shape of the rough electrode rod **3a** is a triangle in the above-described example, but the same effect can be obtained, regardless of the shape, that is, even if the triangle is replaced by a trapezoid or a quadrangle.

Regarding the roughness shape of the rough electrode rod **3a**, the largest outer diameter and the narrowest diameter are defined in the portion of the electrode rod **3** that is covered with the side tube portion **2**, and the outer diameter of the portion of the electrode coil that is not relevant to the withstand pressure is not defined.

This effect of improving the withstand pressure can be obtained, even if the sealing portion glass **9** is replaced by glass in which copper Cu, alumina Al₂O₃ and silica SiO₂ are mixed. Furthermore, the same effect can be obtained, even if the sealing portion glass **9** is replaced by glass in which iron Fe and iron oxide Fe₂O₃ are mixed, glass in which alumina Al₂O₃ is mixed, or glass in which copper oxide CuO, copper Cu, alumina Al₂O₃, sodium carbonate Na₂Co₃, sodium Na, and boron oxide B₂O₃ are mixed.

From above, the withstand pressure of the lamp of this embodiment can reach 30 MPa or more. The advantages from a withstand pressure of 30 MPa will be described below.

For lamps used in combination with a mirror such as a light source for liquid crystal projectors, there is an attempt to make them close to a point light source in order to improve the light utilization efficiency. Although a specific method for making them close to a point light source is to reduce the distance between the electrodes, reducing the distance between the electrodes causes the problem that the lamp voltage is not raised to a predetermined value. When the lamp voltage is low, it is necessary to let a large amount of lamp current flow in order to obtain light flux. However, an appropriate lamp current is determined by the diameter of the electrode rod **3** or the like. When current flows more than that, the temperature of the electrode rod **3** is excessively increased, and the electrode material is scattered so that the luminous bulb **1** is blackened, which may shorten the lamp lifetime. Then, when the electrode rod **3** is enlarged for more current flow, the arc is enlarged so that the lamp is far from a point light source. Furthermore, excessively large electrode rod 3 makes it likely that the arc is operated unstably due to the movement of the luminescent spot or the like. Furthermore, a large and expensive ballast is required for a larger current flow, which contradicts the compactness and inexpensiveness of a system.

For these reasons, it is essential to raise the lamp voltage in order to increase the light flux without raising the lamp current. In other words, in order to let a lamp be a point light source, it is necessary to realize a lamp having a high withstand pressure. The improvement of the withstand pressure provides a large advantage that the safety of a lamp having an operating pressure of, for example, 10 MPa, is improved further. That is to say, the present invention can provide advantages, not only to a lamp with 30 MPa or more, but also lamps with less than 30 MPa, in terms of the improvement of safety and reliability. In particular, for lamps of a level more than 20 MPa (that is, lamps having a light operating pressure exceeding 15 MPa to 20 MPa, which are the withstand pressures of current lamps. For example, lamps with 23 MPa or more, or 25 MPa or more), the present invention provides a large significance that the safety and the reliability can be ensured. Furthermore, in the case of mass production of lamps, it is inevitable that there are variations in the characteristics of the lamps, so that it is necessary to ensure the withstand pressure with consideration for the margin, even for a lamp having a light operating pressure of about 23 MPa. Therefore, the technology that can achieve a withstand pressure of 30 MPa also provides a large advantage to lamps having a withstand pressure of less than 30 MPa from the viewpoint that products can be actually supplied.

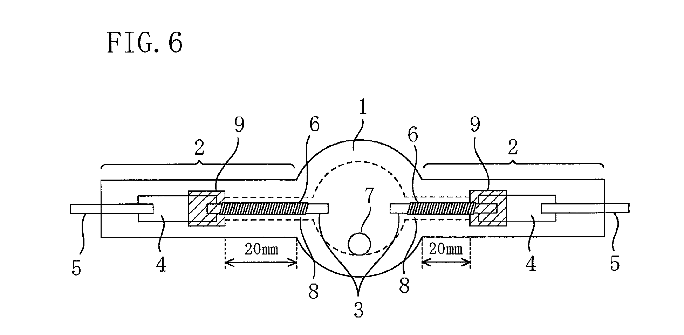

Then, the lamp operation test was performed. Figure **6** shows the structure of the lamp for this test. The same portions as in Figure **1** bear the same reference numerals and are not described further. Here, the end of sealing portion glass **9** on the luminous bulb side is positioned about 20 mm apart from the boundary portion between the luminous portion 1 and the side tube portion **2**. During lamp operation, the temperature at the end portion of the sealing portion glass **9** on the luminous bulb **1** side reached about 100°C, and mercury went into the end portion of the gap **8** on the sealing portion glass **9** side, and the amount of the mercury that participates in discharge was reduced, so that the lamp voltage drops and the light flux was reduced. In other words, if the sealing portion glass **9** is provided in a position that causes the mercury to be solidified significantly, the characteristics of the lamp may deteriorate. That is to say, it is preferable to provide the end portion of the sealing portion glass **9** on the luminous bulb side in a position that does not cause the mercury to be condensed during lamp operation.

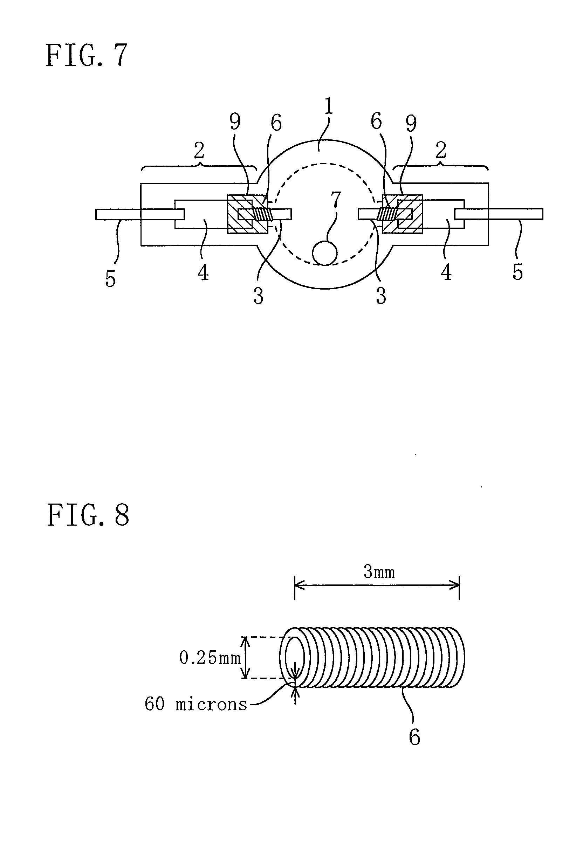

Furthermore, as shown in Figure **7**, when the end portion of the sealing portion glass **9** on the luminous bulb **1** side is provided in the boundary portion between the luminous bulb **1** and the side tube portion **2**, the temperature at the end portion of the sealing portion glass **9** on the luminous bulb **1** side reached about 650°C. Then, the sealing portion glass **9** is melted and attached to the inner surface of the luminous bulb **1**. The softening point of the sealing portion glass **9** is investigated and found to be 570°C. Therefore, when the sealing portion glass **9** is provided such that the temperature of the side tube portion on the luminous bulb side of the sealing portion glass **9** is 500°C during lamp operation, the sealing portion glass **9** is not melted. That is to say, it is preferable to provide the sealing portion glass **9** in a position of the side tube portion **2** having a temperature lower than the softening point of the sealing portion glass **9** during lamp operation. Also the sealing portion glass **9** that is directly exposed to the discharge space of the luminous bulb **1** is not preferable because of scattering of the sealing portion glass **9** due to plasma sputtering. That is to say, it is preferable that the luminous bulb **1** or the side tube portion **2** is present between the sealing portion glass **9** and the discharge space. If the sealing portion glass **9** that is not scattered in the luminous bulb **1** by sputtering or the like is used, the luminous bulb **1** or the side tube portion **2** is not necessarily present between the sealing portion glass **9** and the discharge space.

In the drawings used to describe the embodiment of the present invention, the interface between the sealing portion glass **9** and the side tube portion **2** is distinctly shown, but the interface between the sealing portion glass **9** and the side tube portion **2** is not necessarily distinct.

Even if the sealing portion glass **9** is provided only in the tungsten coil **6**, the attachment between the electrode rod **3** and the side tube portion **2** is improved, although the gap **8b** in the connection portion between the electrode rod **3** and the metal foil **4** is left. Therefore, the withstand pressure of the lamp is improved.

According to the high pressure discharge lamp of this embodiment, the sealing portion glass **9** containing quartz containing at least one metal material selected from the group consisting of metals and metal oxides is provided in a portion of the side tube portion **2** including a portion of the metal foil **4**, a connection portion between the metal foil **4** and the electrode rod **3**, and a portion of the surface area increase structure **6** provided in the electrode rod **3**. Thus, the sealing portion glass **9** is melted into the gap occurring at the connection portion of the metal foil **4** and the electrode rod **3** to fill up the gap, and the sealing portion glass is melted into the surface area increase structure **6** so that the adhesion between the electrode rod **3** and the side tube portion **2** can be tighter. As result, cracks that otherwise might occur in the connection portion between the metal foil **4** and the electrode rod **3** are prevented, and the withstand pressure of the lamp can be improved.

### Embodiment 2

Next, a method for producing the lamp of Embodiment 1 will be described with reference to the accompanying drawings.

Figure **8** shows a tungsten coil 6 to be welded to the electrode rod **3**. The tungsten coil is wound in such a manner that the diameter of the tungsten used in this embodiment is about 60 µm, and the inner diameter of turns is about 0.25 mm. The total length of the tungsten coil **6** is about 3 mm.

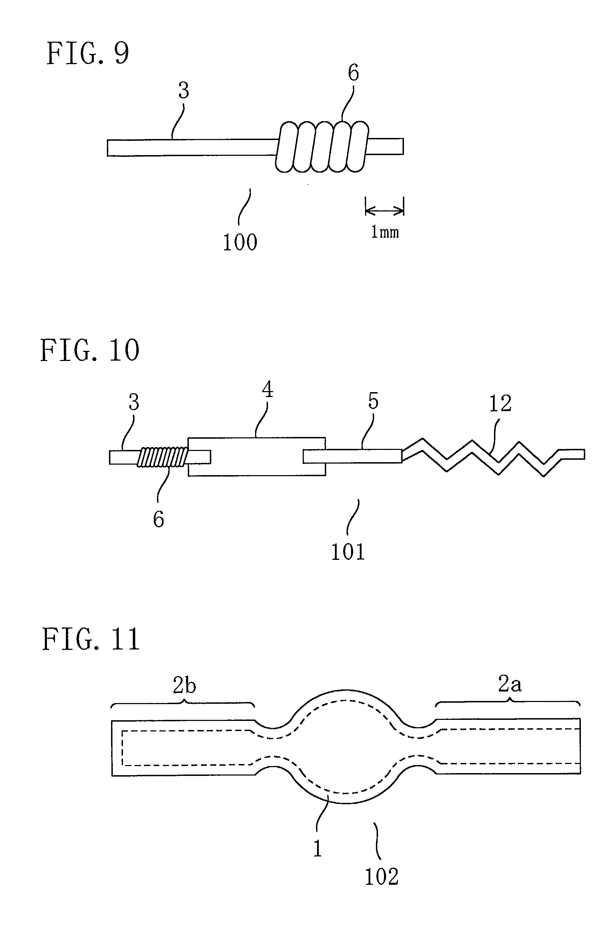

This tungsten coil **6** is inserted in the electrode rod **3** and welded. Figure **9** shows an electrode rod **100** after welding in which the tungsten rod **6** is provided in the electrode rod **3**. The outer diameter of the electrode rod **3** in this embodiment is about 0.25 mm and the length is about 9 mm. The tungsten coil **6** is provided in the electrode rod **3** starting from about 1 mm apart from the end portion, in which the metal foil **4** and the electrode rod **3** are welded.

Figure **10** shows an electrode assembly structure **101** to be used in a lamp. The metal foil **4** is made of, for example, molybdenum, and the width of the metal foil **4** is about 1.0 mm, and the length is about 6 mm. The electrode rod **100** is welded to one end of the metal foil **4**. An external lead wire **5** made of, for example, molybdenum is welded to the other end of the metal foil **4**. A metal spring **12** made of, for example, molybdenum is welded to the other end of the external lead wire **5**. The metal spring **12** can keep the electrode assembly structure **101** inside the side tube portion **2** during production.

Figure **11** shows a tube **102** prepared in another process. The tube **102** is constituted by a hollow and substantially spherical luminous portion **1** that is formed to a predetermined shape by heating and expanding quartz glass and side tube portions **2a** and **2b** that are quartz glass tube extending from both the ends of the luminous portion **1.** The outer diameter of the side tube portions **2a** and **2b** is about 4 mm and the inner diameter is about 2mm. The side tube portion **2a** is open and the side tube portion **2b** is closed.

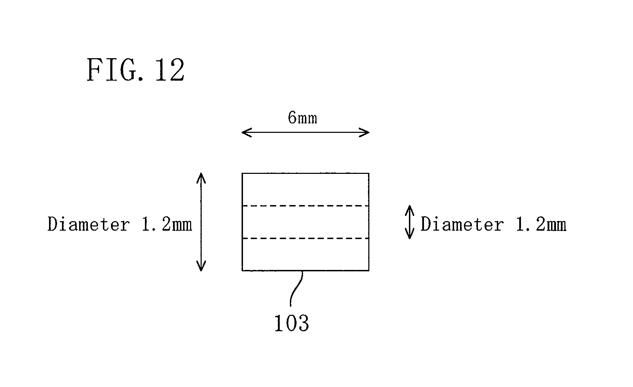

Figure **12** is a cylindrical sealing portion glass **103**. The outer diameter of the cylindrical sealing portion glass **103** is 1.8 mm (± 0.1 mm) and the inner diameter is 1.2mm (± 0.1 mm). The length is about 6 mm.

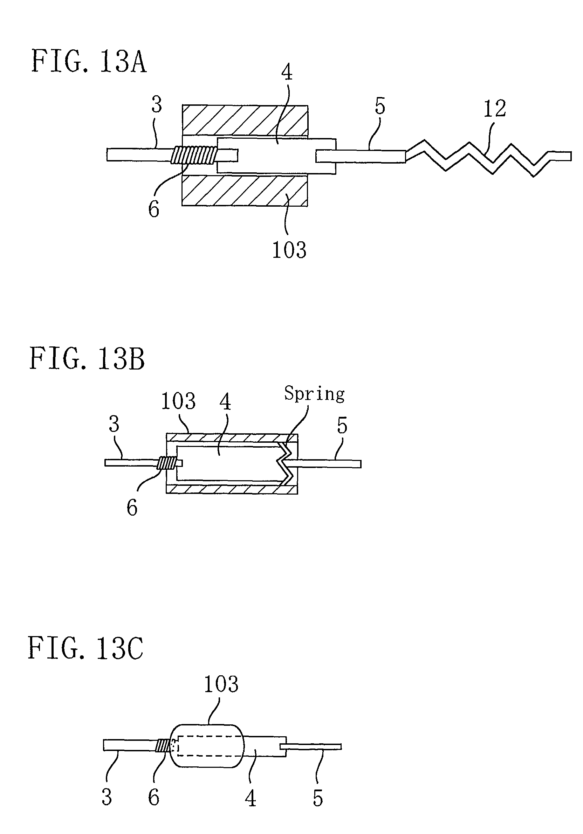

First, the electrode assembly structure **101** is passed through the sealing portion glass **103**. At this time, as shown in Figure **13A**, about 2 mm of the portion of the electrode rod **3** provided with the tungsten coil **6** including the tungsten coil **6** and about 4 mm of the portion from the end portion of the metal foil **4** including a welded portion of the electrode rod **3** and the metal foil **4** are covered with the sealing portion glass **103**.

The sealing portion glass **103** and the electrode rod **3** or the sealing portion glass **103** and the metal foil **4** are fixed, for example, by a method in which a further spring is welded to the welded portion of the metal foil **4** and the external lead wire **5** so that this spring secures the sealing portion glass **103**, as shown in Figure **13B**.

Furthermore, as shown in Figure **13C**, the electrode assembly structure **101** including sealing portion glass **103** previously provided in a predetermined position is heated in an electrode antioxidation atmosphere (e.g., in a vacuum) to fire and attach the sealing portion glass **103** to the electrode rod **3** and the metal foil **4**. In this case, there is no bend or instability in the metal foil **4** into which the sealing portion glass **103** is fired and attached, which facilitates handling. Furthermore, the accuracy of the distance between the electrodes can be improved.

The same effect as in the present invention of improving the attachment degree of the sealing portion glass **103** and the electrode assembly structure **101** and increasing the high withstand pressure of the lamp can be obtained even if the sealing portion glass **103** are fixed to the electrode rod **3** or the metal foil **4** in methods other than above.

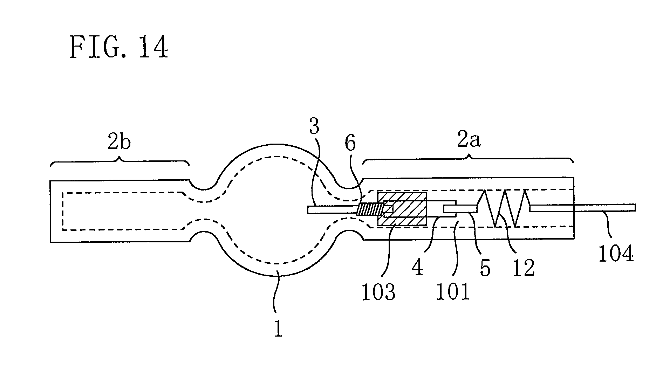

Next, as shown in Figure **14**, the electrode assembly structure **101** provided with the sealing portion glass **103** is inserted from the side tube portion **2a** of the tube **102**. The electrode assembly structure **101** is pressed therein with an insertion rod **104** that is sufficiently narrower than the inner diameter of the side tube portion **2a**. At this time, the electrode assembly structure **101** is secured by the metal spring **12** that is in contact with the inner surface of the side tube portion **2a**. The electrode assembly structure **101** is provided in a predetermined position while the operation of inserting the electrode assembly structure **101** is observed with, for example, a CCD camera. Alternatively, the following method can be used. The sealing portion glass **103** is previously inserted into the side tube portion **2a** and welded to a predetermined position of the side tube portion **2a**, and then the electrode assembly structure **101** is inserted.

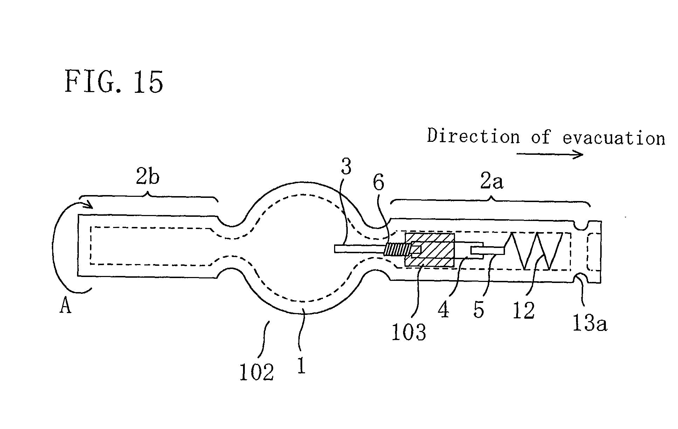

The tube **102** is evacuated in this state. Figure **15** shows this operation. The tube **102** is rotated in the direction shown in arrow A while the tube **102** is supported by a rotatable chuck (not shown in Figure **15**). A portion **13a** near the end portion of the side tube portion **2a** whose end portion has not been sealed is heated and sealed while evacuating the tube **102**.

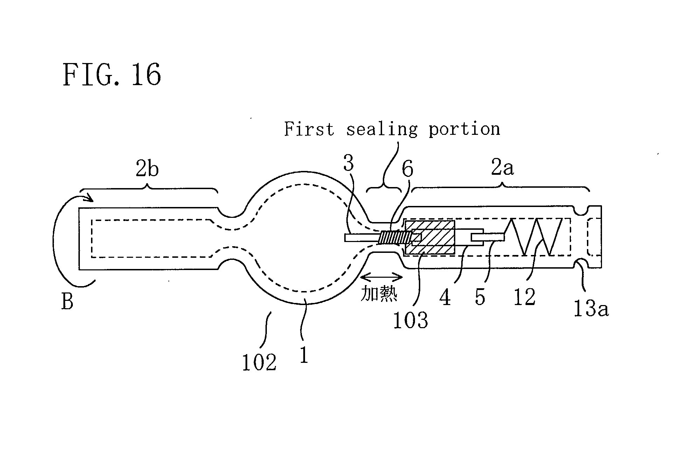

Then, as shown in Figure **16**, the tube **102** is rotated in the direction shown in arrow B while the tube **102** is supported by a rotatable chuck and is heated from the boundary portion between the luminous portion **1** and the side tube portion **2a** up to a portion before the sealing portion glass **103** for shrinking. The portion sealed in this process is referred to as "first sealing portion".

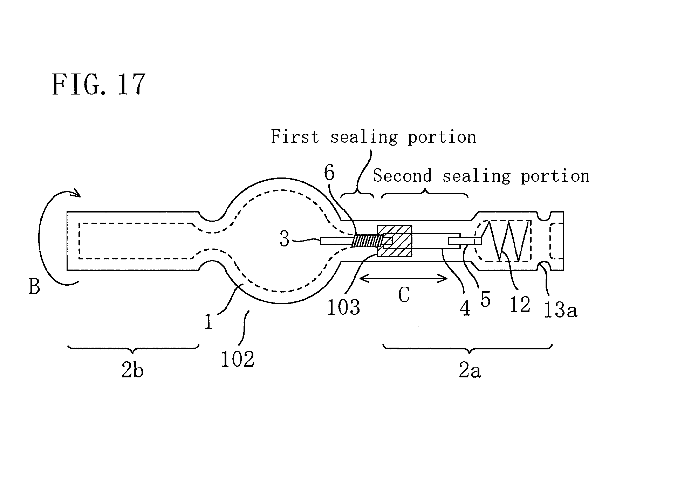

Thereafter, heating is stopped, and the first sealing portion is cooled, then as shown in Figure **17**, the side tube portion **2a** is sequentially heated for shrinking from a portion of the side tube portion **2a** near where the sealing portion glass **103** is positioned to a portion of the side tube portion **2a** where the external lead wire **5** is positioned as shown in arrow **C**, while the tube **102** is rotated in the direction shown in arrow **B**. The portion sealed in this process is referred to as "second sealing portion". After the first sealing portion has been sufficiently cooled, the second sealing is sealed, and therefore impurity gas occurring inside the sealing portion glass **103** during the process for the second sealing portion can be prevented from entering the luminous portion **1** by the first sealing portion.

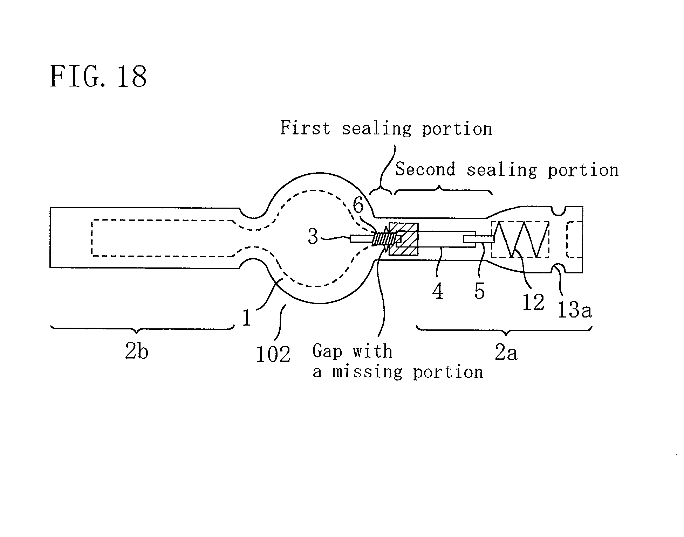

It is preferable that the first sealing portion and the second sealing portion are sufficiently melted so that there is no gap in the boundary portion between them after all the sealing processes are finished. Figure **18** shows an example of a lamp that has a gap because of insufficient heating. In this lamp having a missing portion, stress is concentrated on this gap and the withstand pressure of the lamp is reduced. For the lamp shown in Figure **18**, it was about 25 MPa.

On the other hand, the boundary portion between the first sealing portion and the second sealing portion should be sufficiently heated to eliminate the missing portion. However, heating the missing portion increases the temperature of the first sealing portion glass, which is useful as a trap of impurity gas, so that the impurity gas cannot be trapped sufficiently. Therefore, it is more preferable that the first sealing portion is longer. This is because even if the boundary portion between the first sealing portion and the second sealing portion is sufficiently heated, a large length of the first sealing portion can provide a sufficient temperature distribution for trapping impurity gas in the first sealing portion. More specifically, it is preferable that the first sealing portion is 1mm or more. The longer the first sealing portion is, the larger effect of preventing impurity gas from entering the luminous bulb can be provided.

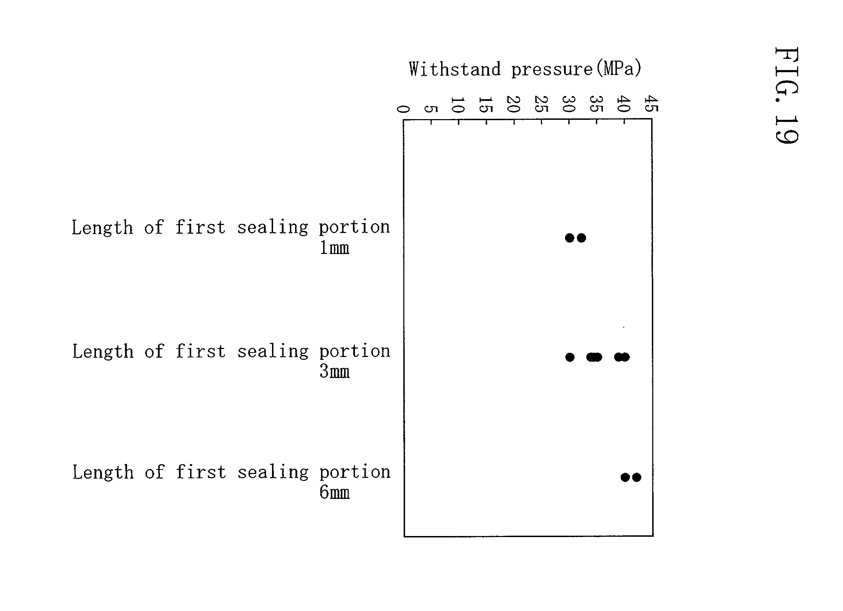

Furthermore, the longer first sealing portion can provide the advantage that the withstand pressure can be improved further. Figure **19** shows the results of the withstand pressure obtained by the withstand pressure test of Embodiment 1 for every length of the first sealing portion. When the length of the first sealing portion is 1 mm or more, the lamp can withstand an operating pressure of 30 MPa or more. In order to realize a lamp having an operating pressure of about 35 MPa, it is preferable that the length of the first sealing portion is 3mm or more. In order to realize a lamp having an operating pressure of about 40 MPa, it is preferable that the length of the first sealing portion is 6mm or more.

After the first sealing portion was formed, the second sealing portion was formed without reducing the temperature of the first sealing portion. In this method as well, a lamp having an improved withstand pressure can be produced. This method has the advantage that the process can be shortened. In particular, in the case of a lamp of a comparatively high power type of 80 W or more, the inner volume of the luminous bulb **1** becomes large, so that impurity gas changes the lamp characteristics only to small extent. That it to say, it is preferable that the process of forming the second sealing portion without intermittence after the first sealing portion is formed is used for a lamp of 50 W or more.

There is a method of narrowing the boundary portion between the luminous portion **1** and the side tube portion **2** (referred to as "reeling") in the process of forming the luminous bulb **1**. In this method, however, the electrode assembly structure **101** is inserted after the process of narrowing that is performed in the process of forming the luminous bulb **1**, so that it is necessary to take the inner diameter of narrowing into consideration so that the electrode coil or the like can pass through the inner diameter. Therefore, it is difficult to process the tube to have a narrowed inner diameter that allows impurity gas to be trapped. Furthermore, the narrowing should be performed straight so that the electrode assembly structure **101** is inserted therein. However, in the narrowing process that is performed in the process of forming the luminous bulb **1**, it is difficult to control the shape, because in general, a mold is pressed onto the outer surface of the boundary portion between the luminous portion **1** and the side tube portion **2.** It is further difficult to control the narrowing process to a length of 1 mm or more.

It is necessary to ensure that no cracks are generated in the glass around the electrode rod **3** in the first sealing portion. A crack around the electrode rod **3** can cause the luminous bulb **1** to be broken starting from the crack. In this embodiment, in order to prevent generation of cracks around the electrode rod **3**, the tungsten coil **6** is also provided in a portion in which the sealing portion glass **103** is not present to facilitate generation of gaps between the side tube portion **2** and the tungsten coil **6**, and further the state of heating is controlled to prevent generation of cracks around the electrode rod **3**.

Furthermore, there is a method of controlling the side tube portion **2a** not to be shrunk more than necessary during heating for sealing by letting the pressure of rare gas in the luminous bulb **1** be less than an atmospheric pressure and more than 100 mbarr or more (about 0.1 MPa or more). The pressure of rare gas is let to be less than an atmospheric pressure because when rare gas is enclosed at an atmospheric pressure or more, the side tube portion **2a** is not shrunk but expanded by heating. The pressure of rare gas is let to be 100 mmbarr or more, because when it is less than 100mmbarr, the side tube portion **2a** is shrunk to large extent during heating, and therefore cracks are generated after the sealing process. It is desirable to obtain the optimal conditions in accordance with the volume and the size of the side tube portion **2a** and the amount of heating energy.

Furthermore, although the longer first sealing portion is better to prevent penetration of impurity gas, too much distance between the sealing portion glass **103** and the luminous portion **1** makes it difficult to emit light at a predetermined output because mercury **7** goes into the side tube portion **3a** during lamp operation. Therefore, the length of the first sealing portion should be such that the end portion of the sealing portion glass **103** on the luminous bulb side is provided in a position that does not allow significant condensation of the mercury 7 during lamp operation. For example, in this embodiment, when the length of the first sealing portion was 30 mm, it was difficult to obtain a predetermined light output because the mercury 7 goes into the side tube portion **3a** significantly.

Furthermore, if the sealing portion glass **103** is melted sequentially from the luminous bulb **1** side to the opposite side, impurity gas occurring from the sealing portion glass **103** can be prevented from going into the luminous portion **1**. As the procedure of heating, it is preferable to perform heating in the above-described manner, but the side tube portion **2a** can be heated at one time using a heating member. Alternatively, it can be heated while the heating member reciprocates in the range from the side tube portion **2a** at the end of the luminous portion **1** to the other side of the side tube portion **2a** in which the external lead wire **5** is positioned. These methods can provide the same characteristics such as improved withstand pressure of the lamp as above. Herein, the heating member means a gas burner, a CO₂ laser, a carbon heater or the like, for example.

Alternatively, sealing by embossing may be performed in the portion of the side tube portion **2a** in which the metal foil **4** is present after the side tube portion **2a** is shrunk by heating for sealing. Sealing by embossing the portion of the side tube portion **2a** in which the metal foil **4** is present provides the advantage that the attachment between the metal foil **4** and the side tube portion **2a** is improved.

Thus, the sealing portion glass **103** as well as the quartz glass material of the side tube portion **2a** is melted and attached to the portion of the electrode rod **3** wound with the tungsten coil **6** and the metal foil **4**. When heating is stopped and natural cooling occurs, the side tube portion **2a** is detached from the electrode rod **3**, which creates a slight gap **8**. However, no gap is created in the portion in which the portion of the electrode rod **3** wound with the tungsten coil **6** and the sealing portion glass **103** are attached. Thus, an electrode is sealed in the luminous bulb by the above-described processes.

Then, since a lamp requires a pair of electrodes, the closed end of the side tube portion **2b** is cut with a cutter in order to insert an electrode on the other end. Mercury, which is a luminous material of the lamp, is introduced through this opening. In this state, the electrode assembly structure **101** is inserted in the same manner as in the side tube portion **2a**.

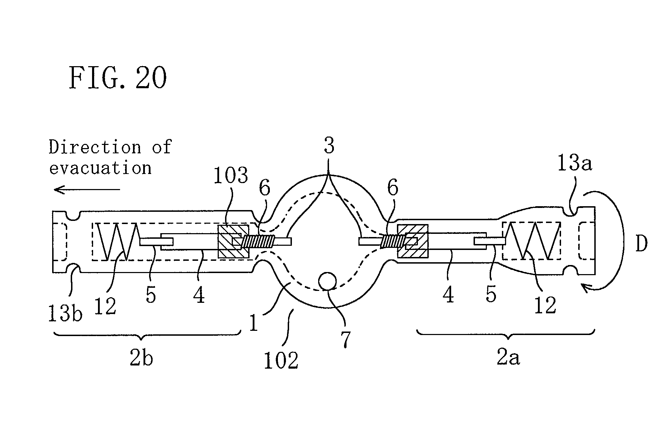

Then, as shown in Figure **20**, the tube **102** is evacuated. The reference numeral **7** denotes mercury enclosed in the luminous portion. Although not shown in Figure **20**, the tube **102** is supported by a rotatable chuck, and the tube **102** is rotated in the direction shown in arrow **D.** Then, the tube **102** is evacuated to a vacuum and a predetermined amount of dry argon gas is introduced and the vicinity of the end **13b** of the side tube portion **2b** is heated and sealed.

Thereafter, in the same procedure as in the process of sealing airtightly the side tube portion **2a** shown in Figures **16** and **17**, the electrode is sealed in the side tube portion **2b**. However, since mercury and rare gas are enclosed in the luminous portion **1,** the operation of airtight sealing is performed while cooling is performed with, for example, water. Then, in order to obtain the lamp having the same shape as in Figure **1**, the ends of both the side tube portions **2a** and **2b** are cut with a cutter to expose the external lead wires **5.** At this point of time, the metal springs **12** in both electrode ends may have been removed.

The glass sleeve **103** is made of glass having the following composition. For example, powders of copper oxide CuO, alumina Al₂O₃, and quartz SiO₂ are mixed and melted into glass. In this case, it is technically possible to melt the powders at a temperature of 1800°C or more, but a heater of a furnace is very expensive. Furthermore, in general, a melting pot is made of platinum, and the platinum component is melted out to the glass in melting at 1750°C or more, and a hole may be formed in the melting pot. Some melting pots withstand a high temperature, but they are very expensive, which increases production cost. Therefore, it is preferable that the softening point of the sealing portion glass **103** is 1750°C or less. When the softening point of the sealing portion glass **103** is too low, the sealing portion glass **103** of the side tube portion **2** is melted out during lamp operation. In general, the temperature of the end portion of the metal foil **4** on the luminous bulb **1** end side is 500°C or less. Therefore, it is preferable that the softening point of the sealing portion glass **103** is 500°C or more. However, since the temperature of the end portion of the metal foil **4** on the luminous bulb **1** end side is changed with the temperature design of an individual lamp, if the temperature of the end portion of the metal foil **4** on the luminous bulb **1** end side is, for example, 400 °C, the sealing portion glass **103** having a softening point of 400°C or more can be used.

When producing glass having two or more components containing SiO₂, it is very difficult to determine the ratio. A wrong ratio results in crystallization instead of formation of glass. It is difficult to obtain the characteristics of Embodiment 1 if crystallized product or ceramics is used in sealing.

When producing glass having two or more components containing SiO₂, the thermal expansion coefficient can be changed arbitrarily depending on the ratio. In order to reduce the difference in the contraction amount of the materials during sealing, it is preferable that the thermal expansion coefficient of the sealing portion glass **103** is between the thermal expansion coefficient of quartz glass, which is the material of the side tube portions **2a** and **2b**, and the thermal expansion coefficient of tungsten, which is the material of the electrode rod **3** and the tungsten coil **6** wound around the electrode rod **3**. Furthermore, when the glass having a thermal expansion coefficient between the thermal expansion coefficient of quartz glass and the thermal expansion coefficient of tungsten is used, slight cracks that tend to be generated between the side tube portions 2a and 2b and the sealing portion glass **103** or between the sealing portion glass **103** and the electrode rod **3** can be prevented.

Another method that includes, instead of using the sealing portion glass **103**, powdering the glass material that can be used to constitute the sealing portion glass **103**, dissolving the glass powder, for example in water, applying it to the connection portion between the electrode rod **3** and the metal foil **4** so as to fill up the connection portion, and heating and firing it in a vacuum furnace was also examined. As a result, the effect of improving the attachment between the electrode rod **3** and the side tube portions **2a** and **2b** and increasing the withstand pressure of the lamp can be obtained as for a lamp in which the sealing portion glass **103** is used for sealing. The glass powder may be applied using static electricity, or may be filled in a mold together with electrodes and then heated to be solidified by firing. Using glass powder can eliminate the process of producing the sealing portion glass **103,** which simplifies the process. Furthermore, when the sealing portion glass **103** is used, the outer diameter of the side tube portions **2a** and **2b** tends to be large to accommodate the sealing portion glass **103**. However, using glass powder provides slender side tube portions, and so that a small mirror advantageously can be combined.

The preferred embodiments of the present invention have been described above, but this description is not limiting the present invention and various modifications can be made.

The high pressure discharge lamp of this embodiment of the present invention can be expressed as follows. The high pressure discharge lamp of this embodiment of the present invention includes a luminous bulb **1** in which a pair of electrode rods (**3, 3**) are provided inside the bulb, and a pair of sealing portions (**2, 2**) that extend from the luminous bulb **1** and maintain the airtightness in the luminous bulb **1**. A part of each of the pair of electrode rods (**3, 3**) is buried in the corresponding sealing portion of the pair of the sealing portions (**2, 2**). One end of the electrode rod **3** is exposed to the internal portion of the luminous bulb **1**, and the other end of the electrode rod **3** is connected to the metal foil **4** provided in the sealing portion **2**. A coil **6** is wound or a threaded portion (see Figure **5**) is formed around at least a portion of the portion buried in the sealing portion **2** of the electrode rod **3**. The sealing portion **2** includes a first glass portion extending from the luminous bulb **1** and a second glass portion **9** provided in at least a part of the inside of the first glass portion. The second glass **9** is glass containing at least one of at least one metal selected from the group copper, aluminum, iron, sodium and boron and metal oxide thereof. The second glass **9** is present in a region including a portion of the metal foil **4**, the connection portion between the metal foil **4** and the electrode rod **3**, and a portion of the electrode rod **3** in which the coil **6** or the threaded portion is positioned.

In the high pressure discharge lamp of this embodiment, if the sealing portion glass (second glass) **9** and the surface area increase structure **6** are formed in at least one of the side tube portions (sealing portions) **2**, the attachment properties can be improved and the withstand pressure can be higher than in the conventional structure. It is preferable that the sealing portion glass (second glass) **9** and the surface area increase structure **6** are formed in both the side tube portions **2**. The surface area increase structure **6** can have a coil structure in one side tube portion and a threaded structure on the other side tube portion.

In the lamp of this embodiment, when the bulb wall load becomes 80W/cm² or more, the bulb wall temperature of the luminous bulb is sufficiently increased, so that all the enclosed mercury evaporates, and therefore an approximate expression of the amount of mercury with respect to the inner volume of the luminous bulb: 400 cm / cc = an operating pressure during operation: 40 MPa can be formulated. Herein, when the mercury amount is 300 mg/cc, the operating pressure is 30 MPa. On the other hand, when the bulb wall load is less than 80W/cm², the temperature of the luminous bulb may not be increased so sufficiently as to evaporate mercury, and therefore an approximate expression may not be formulated. When it is less than 80W/cm², a desired operating pressure cannot be obtained in many cases, and in particular, light emission of a red region is reduced, and therefore the lamp is often unsuitable for a light source of projectors. Therefore, it is preferable that the bulb wall load is 80W/cm² or more for a light source of projectors.

The high pressure discharge lamp (high pressure mercury lamp) of the above-described embodiment can be formed into a lamp unit (a lamp with a reflecting mirror) by combining a reflecting mirror. An image projecting apparatus can be formed by combining the lamp unit with an optical system including an image device (DMD (Digital Micromirror Device) panels or liquid crystal panels). For example, a projector (digital light processing (DLP) projectors) using DMDs or liquid crystal projectors (including reflective projectors using a LCOS (Liquid Crystal on Silicon) structure) can be provided. Furthermore, the lamp of this embodiment can be used preferably, not only as a light source of an image projecting apparatus, but also for other applications, such as a light source for ultraviolet ray steppers or a light source for sport stadium, a light source for automobile headlights, and a floodlight for illuminating traffic signs.

In the above embodiments, a mercury lamp using mercury as a luminous material is used to describe the invention as an example of the high pressure discharge lamp, but the present invention can be applied to any high pressure discharge lamp that has a structure in which the airtightness of the luminous portion can be maintained by the side tube portion (seal portion). For example, the present invention can be applied to a metal halide lamp enclosing a metal halide or a high pressure discharge lamp using xenon. Also in metal halide lamps or the like, the more improved withstand pressure is better. In other words, a lamp with high reliability and long lifetime can be realized by preventing leakage or cracks.

When the structure of the above embodiments is applied to a metal halide lamp enclosing not only mercury but also a metal halide, the following effect can be obtained. The improvement of the attachment by the sealing portion glass (second glass) **9** and the surface area increase structure **6** makes it possible to suppress a reaction between the metal foil **4** and the metal halide (or halogen and an alkaline metal), and as a result, the reliability of the structure of the sealing portion can be improved. In other words, the penetration of the metal halide that otherwise might enter from a slight gap between the metal rod **3** and the glass of the sealing portion **2**, react with the metal foil **4** and cause the foil to be fragile can be reduced effectively by the sealing portion glass **9.** Thus, the structure of the above-embodiment can be applied preferably to a metal halide lamp.

In recent years, mercury-free metal halide lamps that do not enclose mercury are under development, and it is particularly preferable to apply the technology of the above described embodiment to such mercury-free metal halide lamps. In the case of mercury free-metal halide lamps, it is necessary to enclose a larger amount of halogen than that of an ordinary metal halide lamp containing mercury, because they do not contain mercury. Therefore, a large amount of halogen reaches the metal foil **4** through the gap near the electrode rod **3**, and the halogen reacts with the metal foil **4**. Therefore, the sealing portion structure becomes weak, and leakage may occur more readily. If the technology of the embodiments of the present invention is used, such a problem can be solved by the improvement of the attachment by the sealing portion glass (second glass) **9** and the surface area increase structure **6**.

An example of the mercury-free metal halide lamp to which the present invention is applied is a lamp having the structure shown in Figure **1** but not substantially enclosing mercury and enclosing at least a first halogenide, a second halogenide and rare gas. The metal of the first halogenide is a luminous material, and the second halogenide has a vapor pressure higher than that of the first halogenide, and is a halogenide of one or more metals that emit light in a visible light region with more difficulty than the metal of the first halogenide. For example, the first halogenide is a halogenide of one or more metals selected from the group consisting of sodium, scandium, and rare earth metals. The second halogenide has a relatively larger vapor pressure and is a halogenide of one or more metals that emit light in a visible light region with more difficulty than the metal of the first halogenide. More specifically, the second halogenide is a halogenide of at least one metal selected from the group consisting of Mg, Fe, Co, Cr, Zn, Ni, Mn, Al, Sb, Be, Re, Ga, Ti, Zr, and Hf. The second halogenide containing at least a halogenide of Zn is more preferable.

Another combination example is as follows. In a mercury-free metal halide lamp including a translucent luminous bulb (airtight vessel) **1,** a pair of electrodes **3** provided in the luminous bulb **1,** and a pair of sealing portion **2** coupled to the luminous bulb **1,** ScI₃ (scandium iodide) and NaI (sodium iodide) as luminous materials, InI₃ (indium iodide) and TlI (thallium iodide) as alternative materials to mercury, and rare gas (e.g., Xe gas at 1.4 MPa) as starting aid gas are enclosed in the luminous bulb **1.** In this case, the first halogenide is constituted by ScI₃ (scandium iodide) and NaI (sodium iodide), and the second halogenide is constituted by InI₃ (indium iodide) and TlI (thallium iodide). The second halogenide can be any halogenide, as long as it has a comparatively high vapor pressure and can serve as an alternative to mercury, and therefore, for example, an iodide of Zn can be used, instead of InI₃ (indium iodide).

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A high pressure discharge lamp comprising:
a vessel made mainly of quartz including a luminous portion and side tube portions extending from both sides of the luminous portion;
mercury enclosed in the luminous portion;
a metal foil buried in each of the side tube portions; and
an electrode rod, one end of which is connected to the metal foil and the other of which is extending to the luminous portion,
wherein the electrode rod has a surface area increase structure for increasing a surface area in at least a part of a portion buried in the side tube portion, and
a sealing portion glass containing at least one metal material selected from the group consisting of metals and metal oxides thereof is provided in a portion of the side tube portion including at least a part of the metal foil, a connection portion between the metal foil and the electrode rod and a part of the surface area increase structure.

2. The high pressure discharge lamp according to claim 1, wherein an amount of the mercury enclosed is 230 mg /cm³ or more based on a volume of the luminous portion.

3. The high pressure discharge lamp according to claim 1, wherein an internal pressure of the luminous portion is 23 MPa or more during stable operation.

4. The high pressure discharge lamp according to claim 3, wherein an internal pressure of the luminous portion is 30 MPa or more during stable operation.

5. The high pressure discharge lamp according to claim 1, wherein the sealing portion glass is provided in a position having a temperature at which the mercury is not aggregated during stable operation or higher and a temperature at which the sealing portion glass is not softened or lower during stable operation.

6. The high pressure discharge lamp according to claim 1, wherein the metal in the sealing portion glass is selected from the group consisting of copper, aluminum, iron, sodium and boron.

7. The high pressure discharge lamp according to claim 1, wherein the surface area increase structure is a coil structure.

8. The high pressure discharge lamp according to claim 1, wherein
the surface area increase structure is a threaded structure, and
when an outer diameter of the narrowest portion of a portion of the electrode rod in which the surface area increase structure is provided is taken as 1, an outer diameter of the most projected portion is in a range from 1.1 to 2.0.

9. A high pressure discharge lamp comprising:
a luminous bulb including a pair of electrode rods inside the bulb; and
a pair of sealing portions that extend from the luminous bulb and maintain airtightness in the luminous bulb;
wherein a part of each of the pair of electrode rods is buried in a corresponding sealing portion of the pair of sealing portions,
one end of the electrode rod is exposed to an internal portion of the luminous bulb, and the other end of the electrode rod is connected to a metal foil provided in the sealing portion,
a coil is wound around or a threaded portion is formed in at least a part of a portion buried in the sealing portion of the electrode rod,
the sealing portion has a first glass portion extending from the luminous bulb and a second glass portion provided in at least a part of the inside of the first glass portion,
the second glass is glass containing at least one of at least one metal selected from the group consisting of copper, aluminum, iron, sodium and boron, and metal oxides thereof, and
the second glass is present in a region of the sealing portion including a part of the metal foil, a connection portion between the metal foil and the electrode rod, and a portion of the electrode rod in which the coil or the threaded portion is positioned.

10. A method for producing a high pressure discharge lamp comprising:
preparing a vessel made mainly of quartz including a luminous portion and side tube portions extending from both sides of the luminous portion; and an electrode assembly structure including at least a metal foil and an electrode rod connected to one end of the metal foil and having a surface area increase structure;
covering a portion of the electrode assembly structure including at least a part of the metal foil, a connection portion between the metal foil and the electrode rod, and a part of the surface area increase structure with a sealing portion glass made of quartz glass containing at least one metal material selected from the group consisting of metals and metal oxides;
inserting the electrode assembly structure in the vessel such that the portion of the electrode assembly structure covered with the sealing portion glass is positioned inside the side tube portions; and
heating the side tube portion to seal the electrode assembly structure.

11. The method for producing a high pressure discharge lamp according to claim 10, wherein the step of heating the side tube portion to seal the electrode assembly structure comprises:
the step of shrinking the side tube portion from a boundary portion between the luminous portion and the side tube portion up to a portion before the sealing portion glass; and
the step of shrinking the side tube portion on the metal foil side from the end portion of the sealing portion glass on the luminous portion side.

12. The method for producing a high pressure discharge lamp according to claim 10, wherein the step of heating the side tube portion to seal the electrode assembly structure comprises the step of shrinking the side tube portion from a boundary portion between the luminous portion and the side tube portion up to a portion before the sealing portion glass and shrinking the side tube portion on the metal foil side from the end portion of the sealing portion glass on the luminous portion side.

13. The method for producing a high pressure discharge lamp according to claim 10, wherein the step of heating the side tube portion to seal the electrode assembly structure comprises the step of shrinking the side tube portion from a boundary portion between the luminous portion and the side tube portion up to a portion before the sealing portion glass, cooling the side tube portion, and then shrinking the side tube portion on the metal foil side from the end portion of the sealing portion glass on the luminous portion side.

14. The method for producing a high pressure discharge lamp according to claim 11, wherein when shrinking the side tube portion from a boundary portion between the luminous portion and the side tube portion up to a portion before the sealing portion glass, the side tube portion is shrunk in a direction from the boundary portion between the luminous portion and the side tube portion to the sealing portion glass.

15. The method for producing a high pressure discharge lamp according to claim 10, wherein the sealing portion glass is a cylindrical structure.

16. The method for producing a high pressure discharge lamp according to claim 15, further comprising inserting the sealing portion glass in the electrode assembly structure; and firing and attaching the sealing portion glass to the electrode assembly structure.

17. The method for producing a high pressure discharge lamp according to claim 10, wherein the sealing portion glass is formed by applying a powder material and firing the same.

18. The method for producing a high pressure discharge lamp according to claim 10, wherein the surface area increase structure is a coil structure.

19. The method for producing a high pressure discharge lamp according to claim 10, wherein the surface area increase structure is a threaded structure, and when an outer diameter of the narrowest portion of a portion of the electrode rod in which the surface area increase structure is provided is taken as 1, an outer diameter of the most projected portion is in a range from 1.1 to 2.0.

20. The method for producing a high pressure discharge lamp according to claim 10, wherein a softening point of the sealing portion glass is in a range from 500°C to 1750°C.

21. The method for producing a high pressure discharge lamp according to claim 10, wherein the metal in the sealing portion glass is at least one selected from the group consisting of copper, aluminum, iron, sodium and boron.
